# EUROPEAN PATENT APPLICATION

(11) **EP 4 445 974 A1**
(43) Date of publication of application: **16.10.2024**
(21) Application number: 22903971.4
(22) Date of filing: 14.11.2022
(51) Int. Cl.: A63F 13/422, A63F 13/533, A63F 13/537, A63F 13/67, G06N 20/00

(54) **INFORMATION PROCESSING DEVICE, INFORMATION PROCESSING METHOD, AND PROGRAM**

(30) Priority: 09.12.2021 JP 2021200084
(71) Applicant: Sony Group Corporation, Tokyo 108-0075 (JP)
(72) Inventor: TAKASHIMA, Kouichiro, Tokyo 108-0075 (JP)
(74) Representative: D Young & Co LLP
(86) International application number: PCT/JP2022/042182
(87) International publication number: WO 2023/106040

(57) **Abstract**

An information processing device (10) includes a learning unit (16b) that learns an action of a user on a game application (corresponding to an example of an "application") by machine learning, and a gameplay assistance unit (16c) (corresponding to an example of an "assistance unit") that executes, across one or more of the game applications, gameplay assistance processing (corresponding to an example of "operation assistance processing") of assisting an input by the user on the game application by using a learning result of the learning unit (16b) .

## Description

### Field

The present disclosure relates to an information processing device, an information processing method, and a program.

### Background

In recent years, the spread of portable information processing devices such as smartphones and tablet terminals is remarkable. In addition, in these information processing devices, performance of image processing and communication processing is also rapidly improved, and a user can easily enjoy various kinds of game application software (hereinafter, referred to as "game application") such as, for example, a third-person shooter (TPS) and a massively multiplayer online role-playing game (MMORPG) by using these information processing devices.

Furthermore, in such a situation, in order to further improve convenience of the user, some game applications have, for example, an auto-play function of automatically executing predetermined game contents set in advance. Low-skill users, busy users, and the like can be assisted in their own gameplay by using such an auto-play function. Similarly, a technology of assisting team organization and strategy in a team environment such as the MMORPG has also been proposed (see, for example, Patent Literature 1).

### Citation List

### Patent Literature

Patent Literature 1: Japanese Patent Application Laid-open No. 2021-041225

### Summary

### Technical Problem

However, the above-described conventional technology has room for further improvement in improving convenience in gameplay of the user regardless of the game application.

For example, in a case where the above-described conventional technology is used, only a user who uses a specific game application having an auto-play function can be assisted in gameplay.

Note that such a problem is also a common problem in a case where a user operates an application that is other than a game application and that has or does not have an automatic operation function corresponding to the auto-play function.

Thus, the present disclosure proposes an information processing device, an information processing method, and a program capable of improving convenience in application operation by the user regardless of the application.

### Solution to Problem

In order to solve the above problems, one aspect of an information processing device according to the present disclosure includes: a learning unit that learns an action of a user on an application by machine learning; and an assistance unit that executes, across one or more of the applications, operation assistance processing of assisting an input by the user on the application by using a learning result of the learning unit.

### Brief Description of Drawings

FIG. 1 is a schematic explanatory diagram (part 1) of an information processing method according to an existing technology.
FIG. 2 is a schematic explanatory diagram (part 2) of the information processing method according to the existing technology.
FIG. 3 is a schematic explanatory diagram (part 1) of an information processing method according to an embodiment of the present disclosure.
FIG. 4 is a schematic explanatory diagram (part 2) of the information processing method according to the embodiment of the present disclosure.
FIG. 5 is a block diagram illustrating a configuration example of an information processing device according to the embodiment of the present disclosure.
FIG. 6 is a view (part 1) illustrating a specific example of a case of a shooting game.
FIG. 7 is a view (part 2) illustrating the specific example of the case of the shooting game.
FIG. 8 is a view (part 3) illustrating the specific example of the case of the shooting game.
FIG. 9 is an explanatory diagram of temporal invalidation of an input by a user.
FIG. 10 is a view (part 1) illustrating a specific example of a case of a soccer game.
FIG. 11 is a view (part 2) illustrating a specific example of the case of the soccer game.
FIG. 12 is a view (part 3) illustrating a specific example of the case of the soccer game.
FIG. 13 is an explanatory diagram of pattern detection (in a case of the shooting game).
FIG. 14 is an explanatory diagram of pattern detection (in a case of the soccer game).
FIG. 15 is a view illustrating an example of coaching corresponding to a skill of the user.
FIG. 16 is a view illustrating an example of a setting screen of real-time coaching.
FIG. 17 is a view illustrating a specific example of the real-time coaching.
FIG. 18 is a view illustrating a guide example of replay coaching.
FIG. 19 is a view illustrating a specific example of the replay coaching.
FIG. 20 is an explanatory diagram of changing a method of coaching according to a surrounding environment.
FIG. 21 is an explanatory diagram of an example of notification to another information processing device.
FIG. 22 is a hardware configuration diagram illustrating an example of a computer that realizes functions of the information processing device. Description of Embodiments

In the following, embodiments of the present disclosure will be described in detail on the basis of the drawings. Note that in each of the following embodiments, overlapped description is omitted by assignment of the same reference sign to the same parts.

Furthermore, in the following, a case where an application operated by a user is a game application will be described as a main example.

Furthermore, the present disclosure will be described in the following order of items.
1. Outline
2. Configuration of an information processing device
3. Specific example of gameplay assistance processing
3-1. Example of a shooting game
3-2. Example of a soccer game
3-3. Example of coaching
4. Example of notification to another information processing device
5. Modification example
6. Hardware configuration
7. Conclusion

### <<1. Outline>>

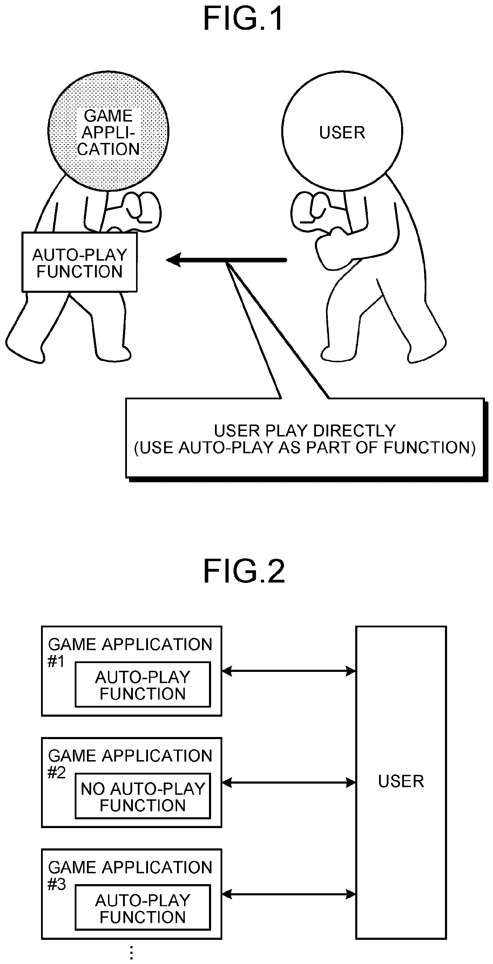

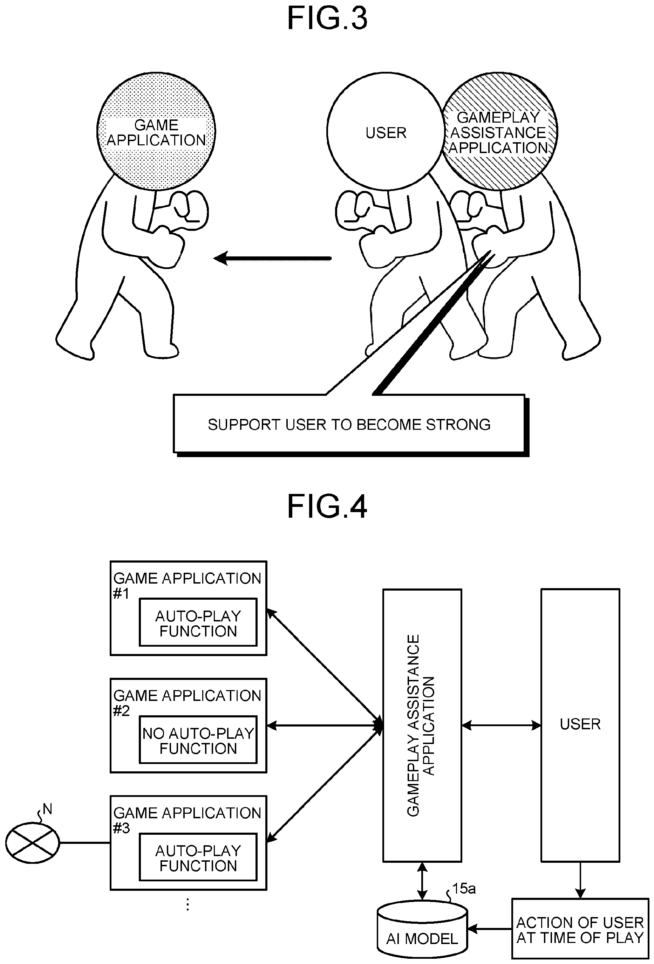

FIG. 1 is a schematic explanatory diagram (part 1) of an information processing method according to an existing technology. FIG. 2 is a schematic explanatory diagram (part 2) of the information processing method according to the existing technology. FIG. 3 is a schematic explanatory diagram (part 1) of an information processing method according to an embodiment of the present disclosure. FIG. 4 is a schematic explanatory diagram (part 2) of the information processing method according to the embodiment of the present disclosure.

In recent years, a user can easily enjoy various game applications such as a TPS and an MMORPG by using a portable information processing device such as a smartphone or a tablet terminal, and some game applications have an auto-play function as a part of the function.

Low-skill users, busy users, and the like can be assisted in their own gameplay by using such an auto-play function. On the other hand, as a matter of course, a user who uses a game application not having the auto-play function cannot be assisted in the gameplay by the auto-play function.

Specifically, as illustrated in FIG. 1, the existing technology is based on a relationship in which the user directly plays one game application on a one-to-one basis. Furthermore, at this time, even when the game application has the auto-play function, the user can only use the auto-play as a part of the function of the game application. Contents of the auto-play usually varies depending on game applications.

Thus, as illustrated in FIG. 2, in a case where the user uses a plurality of game applications by using one information processing device, the user needs to perform different operations for game sessions of the game applications respectively with respect to the use of the auto-play in the existing technology.

That is, in the existing technology, obviously, the user cannot use the auto-play for the game application that does not have the auto-play function. Thus, in the example of FIG. 2, the user cannot use the auto-play for a game application #2.

On the other hand, although the user can use the auto-play for the game applications having the auto-play function, that is, game applications #1 and #3 in the example of FIG. 2, contents of the auto-play that can be set vary depending on the game applications.

Note that examples of the auto-play function include a function in which specific game contents can be played completely on behalf of the user, a function in which the user basically plays a game and an input by the user is partially assisted, and the like. The former is used for monotonous level grinding work that is so-called "leveling". The latter is used in a case where play accuracy of the user is improved.

However, since contents of such auto-play vary depending on the game applications, for example, even when the user wants to improve play accuracy of the game application #1 and improve the skill, the need of the user cannot be satisfied unless the game application #1 does not have the auto-play function for improving the play accuracy. Similarly, for example, even when the user wants to improve play accuracy of the game application #2 and improve the skill, since the game application #2 does not have the auto-play function in the first place, it is still impossible to satisfy the need of the user.

Thus, in the information processing method according to the embodiment of the present disclosure, an action of the user with respect to a game application is learned by machine learning, and gameplay assistance processing of assisting an input by the user to the game application by using a learning result of the machine learning is executed across one or more of the game applications.

Specifically, the information processing device according to the embodiment of the present disclosure has a gameplay assistance function. As illustrated in FIG. 3, a "gameplay assistance application" that executes such a function provides a game application with an auto-play function of accompanying the user in terms of an image and supporting the user to become strong, in other words, assisting an input by the user in such a manner as to improve play accuracy of the user.

Furthermore, as illustrated in FIG. 4, the gameplay assistance application provides the auto-play function in a form of integrating a plurality of game applications, in other words, across a plurality of game applications. Thus, with respect to the game application #2 that does not originally have the auto-play function, the gameplay assistance application can also provide the auto-play function that supports the user to become strong. In addition, with respect to the game applications #1 and #3 originally having individual auto-play functions, the gameplay assistance application can provide the auto-play function that supports the user to become strong.

For example, as illustrated in FIG. 4, the gameplay assistance application provides the auto-play function that assists the input by the user on the basis of an artificial intelligence (AI) model 15a that learns the action of the user at the time of play as needed. The AI model 15a is, for example, a deep neural network (DNN) or the like.

That is, in the information processing method according to the embodiment of the present disclosure, information related to the action of the user at the time of playing each game application is acquired, and the input by the user is assisted according to a feature of the action of the user at the time of the play, which is learned by utilization of the information. The information related to the action of the user at the time of the play includes, for example, "operation before an input" of the user until a specific input during the play, and a "result after the input" of the specific input described above.

Specifically, in the information processing method according to the embodiment of the present disclosure, machine learning is performed on the "operation before an input" of the user and the "result after the input", and correlation of each result of success or failure and the operation before the input by the user for each of the results is acquired. Then, an input method that can succeed in all cases is calculated by utilization of the AI model 15a that is the learning result of the acquisition of the correlation described above. Then, in and after next gameplay by the user, a pattern of the operation before the input by the user is detected, and a successful input pattern is specified from the calculated input method.

Note that, hereinafter, the "gameplay assistance application" is appropriately referred to as "AI" in a sense of using the AI model 15a. In addition, the input pattern corresponds to an example of an "input value".

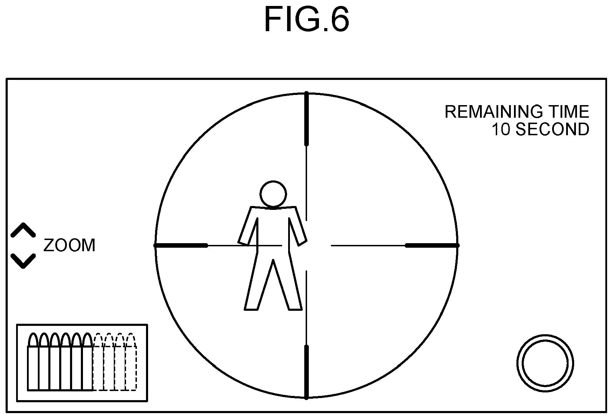

The AI according to the embodiment of the present disclosure provides, for example, an auto-play function of specifying a successful input pattern in machine learning by detecting a pattern of the operation before the input by the user in and after the next gameplay of the user, temporarily invalidating the input by the user, and performing replacement with an input pattern to be successful. A specific example of such a point will be described later with reference to FIG. 6 to FIG. 14.

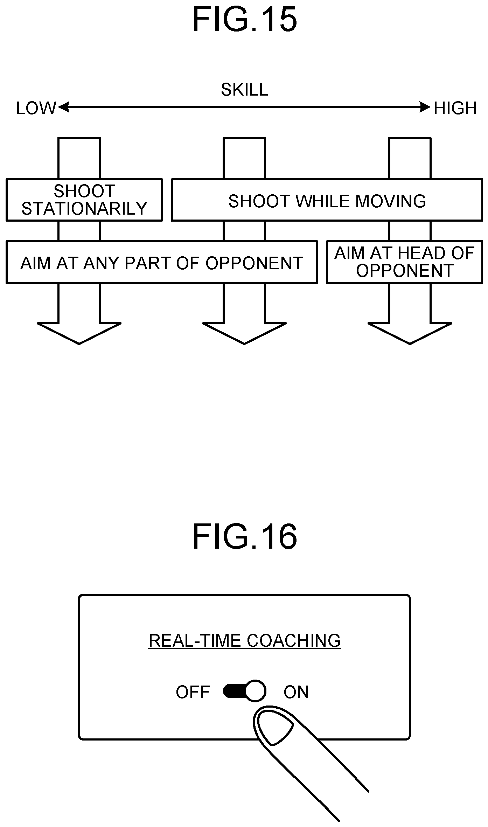

Furthermore, the AI according to the embodiment of the present disclosure provides, for example, an auto-play function of performing on-demand coaching by voice or the like at the time of the play by the user, for example. The AI can perform, for example, coaching corresponding to a skill of the user, perform coaching that responds to pattern-detected operation before the input by the user in real time, or perform coaching while replaying a video of a play scene during or after the play. Furthermore, the AI can change the method of coaching according to, for example, a surrounding environment of the user. Specific examples of these points will be described later with reference to FIG. 15 to FIG. 20.

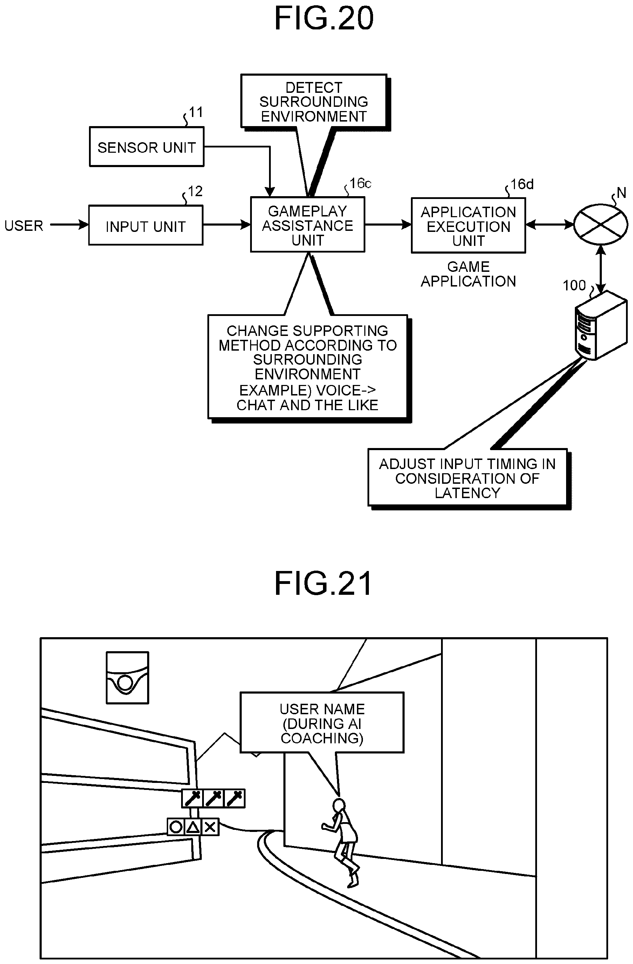

Furthermore, as illustrated in FIG. 4, the AI according to the embodiment of the present disclosure can notify the other information processing device 10 that the auto-play function is used for a game application that exchanges information with the other information processing device 10 via the network N, such as the game application #3, for example. Such a specific example will be described later with reference to FIG. 21.

In such a manner, in the information processing method according to the embodiment of the present disclosure, the action of the user with respect to the game application is learned by machine learning, and the gameplay assistance processing of assisting the input by the user to the game application by using the learning result of the machine learning is executed across one or more of the game applications.

Thus, according to the information processing method according to the embodiment of the present disclosure, it is possible to improve convenience in gameplay by the user regardless of the game application. Specifically, according to the information processing method according to the embodiment of the present disclosure, it is possible to improve play accuracy in gameplay by the user regardless of the game application. Hereinafter, a configuration example of the information processing device 10 to which the information processing method according to the embodiment of the present disclosure is applied will be described more specifically.

### <<2. Configuration of an information processing device>>

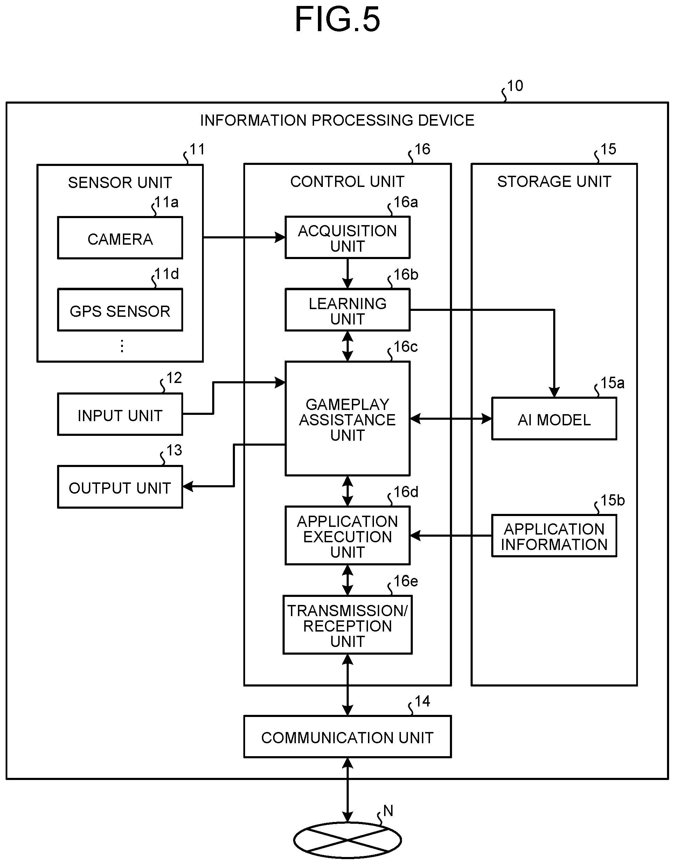

FIG. 5 is a block diagram illustrating the configuration example of the information processing device 10 according to the embodiment of the present disclosure. Note that only components necessary for describing features of the embodiment of the present disclosure are illustrated in FIG. 5, and description of general components is omitted.

In other words, each of the components illustrated in FIG. 5 is functionally conceptual, and is not necessarily configured physically in an illustrated manner. For example, a specific form of distribution/integration of each block is not limited to what is illustrated in the drawings, and a whole or part thereof can be functionally or physically distributed/integrated in an arbitrary unit according to various loads and usage conditions.

Furthermore, in the description with reference to FIG. 5, description of the already-described components may be simplified or omitted.

The information processing device 10 is a computer used by the user to use a game application and various other applications, and is, for example, a smartphone or a tablet terminal. Note that the information processing device 10 may be a personal computer (PC), a wearable device, or a game dedicated machine or the like as when being limited to a game application.

As illustrated in FIG. 5, the information processing device 10 includes a sensor unit 11, an input unit 12, an output unit 13, a communication unit 14, a storage unit 15, and a control unit 16.

The sensor unit 11 is a group of various sensors, and includes, for example, a camera 11a and a GPS sensor 11d.

The camera 11a is, for example, a rear camera, a front camera, or the like of a smartphone, and is provided in such a manner as to be able to capture image data from which a surrounding environment of the user who is playing a game can be detected. The GPS sensor 11d measures a GPS position of the user who is playing the game. Note that, needless to say, the sensor unit 11 may appropriately include various sensors other than those described above, such as an inertial sensor and a microphone.

The input unit 12 is an input component to which the user inputs various kinds of operation. Note that the input unit 12 may be integrated with the output unit 13 (described later) by a touch panel or the like. Thus, the input unit 12 may be a software component, and may be a graphical user interface (GUI) for operating a game application, for example.

The output unit 13 is, for example, a display device that displays visual information, and displays visual information such as a moving image and text related to an entire system or the game application under the control of the control unit 16. Examples of the above display device include a liquid crystal display (LCD), an organic light emitting diode (OLED), and the like.

Furthermore, the output unit 13 is, for example, a sounding device that emits voice information, and emits voice information such as a voice related to the entire system or the game application under the control of the control unit 16. Examples of the sounding device include a speaker and the like.

The communication unit 14 is realized, for example, by a network interface card (NIC) or the like. The communication unit 14 is connected in a wireless or wired manner to the network N such as the Internet or a mobile phone network, and transmits and receives information to and from the other information processing device 10 or a game server 100 (see FIG. 20) via the network N.

The storage unit 15 is realized by, for example, a semiconductor memory element such as a random access memory (RAM), a read only memory (ROM), or a flash memory. In the example illustrated in FIG. 5, the storage unit 15 stores the AI model 15a and application information 15b.

The AI model 15a already illustrated in FIG. 4 is a learning model learned by a learning unit 16b (described later). As described above, the AI model 15a is a DNN or the like, and learns correlation of elements in a multidimensional feature amount space having elements indicating the contents of the game and the action of the user at the time of the play as dimensions as needed.

As described above, elements include the "operation before an input" of the user until the specific input during the play, the "result after the input" of the specific input described above, and the like.

The application information 15b is information including various applications executed by the information processing device 10, such as programs of the game applications, various parameters used during execution of the game applications, and the like.

The control unit 16 is a controller, and is realized, for example, when various programs stored in the storage unit 15 are executed by a central processing unit (CPU), a micro processing unit (MPU), or the like with a RAM as a work area. Also, the control unit 16 can be realized by, for example, an integrated circuit such as an application specific integrated circuit (ASIC) or a field programmable gate array (FPGA).

The control unit 16 includes an acquisition unit 16a, the learning unit 16b, a gameplay assistance unit 16c, an application execution unit 16d, and a transmission/reception unit 16e, and realizes or executes a function and an action of information processing described below.

The acquisition unit 16a acquires data indicating the surrounding environment of the user via the sensor unit 11. In addition, the acquisition unit 16a outputs the acquired data indicating the surrounding environment to the learning unit 16b as needed. Note that the acquisition unit 16a can acquire the data indicating the surrounding environment via the network N (such as a temperature, weather, traffic condition, latency, and the like) not only from the sensor unit 11 but also from, for example, the transmission/reception unit 16e (described later).

The learning unit 16b learns the AI model 15a on the basis of the "operation before the input" from the input unit 12, which is input via the gameplay assistance unit 16c (described later) and the "result after the input" output to the output unit 13.

Note that in a case where the AI model 15a is the DNN, the learning unit 16b learns the AI model 15a by using deep learning. Furthermore, the learning unit 16b can learn the AI model 15a while adding the data indicating the surrounding environment and acquired by the acquisition unit 16a to each of the elements described above.

The gameplay assistance unit 16c executes gameplay assistance processing for realizing the function of the gameplay assistance application described with reference to FIG. 3 and FIG. 4. That is, the gameplay assistance unit 16c provides the auto-play function that supports the user to become strong in each of the game applications in a form of integrating the plurality of game applications.

Specifically, by performing the machine learning on the "operation before an input" of the user and the "result after the input", the gameplay assistance unit 16c calculates an input method, which can make all cases successful, by using the AI model 15a that is a learning result acquired by correlation of each result of success or failure and the operation before the input by the user with respect to each result.

Then, in and after the next gameplay by the user, by detecting a pattern of the operation before the input by the user, the gameplay assistance unit 16c specifies a successful input pattern from the calculated input method.

In addition, the gameplay assistance unit 16c temporarily invalidates the input by the user, and performs replacement with the specified input pattern to be successful.

Furthermore, the gameplay assistance unit 16c executes the gameplay assistance processing of performing the on-demand coaching by voice or the like at the time of the play by the user, or the like. With respect the coaching, for example, the gameplay assistance unit 16c executes the gameplay assistance processing in such a manner as to perform coaching corresponding to the skill of the user.

In addition, the gameplay assistance unit 16c executes the gameplay assistance processing in such a manner as to perform coaching that responds to the pattern-detected operation before the input by the user in real time. Furthermore, the gameplay assistance unit 16c executes the gameplay assistance processing in such a manner as to change the method of coaching according to the surrounding environment of the user.

Furthermore, the gameplay assistance unit 16c notifies the other information processing device 10, with which the application execution unit 16d exchanges information related to the currently-executed game application via the network N, that the auto-play function is used.

Note that the gameplay assistance unit 16c executes the gameplay assistance processing while residing in the control unit 16 as, for example, middleware.

On the basis of the application information 15b, the application execution unit 16d executes the game application started by the user. In addition, from the gameplay assistance unit 16c, the application execution unit 16d receives an input by the user via the input unit 12 or an input by the auto-play in place of the user. In addition, the application execution unit 16d causes the output unit 13 to output the contents of the game, which progresses according to the received input, as an output result via the gameplay assistance unit 16c.

In a case where it is necessary to exchange the information related to the game application, which is currently executed by the application execution unit 16d, with the other information processing device 10, the transmission/reception unit 16e transmits and receives the information to and from the other information processing device 10 via the communication unit 14. Note that although not illustrated, the transmission/reception unit 16e can receive data that indicates the surrounding environment and that can be acquired via the network N, and cause the acquisition unit 16a to perform the acquisition.

### <<3. Specific example of gameplay assistance processing>>

Next, a specific example of the gameplay assistance processing according to the embodiment of the present disclosure will be described with reference to FIG. 6 to FIG. 21.

### <3-1. Example of a shooting game>

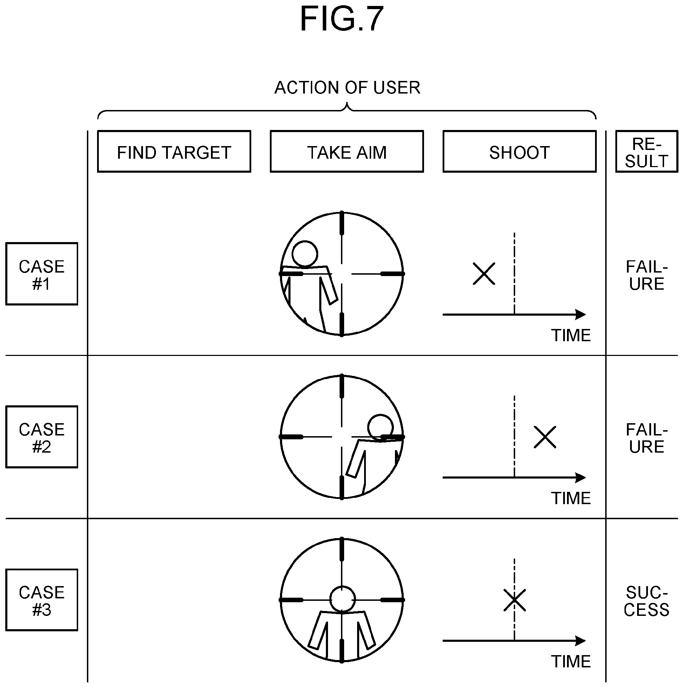

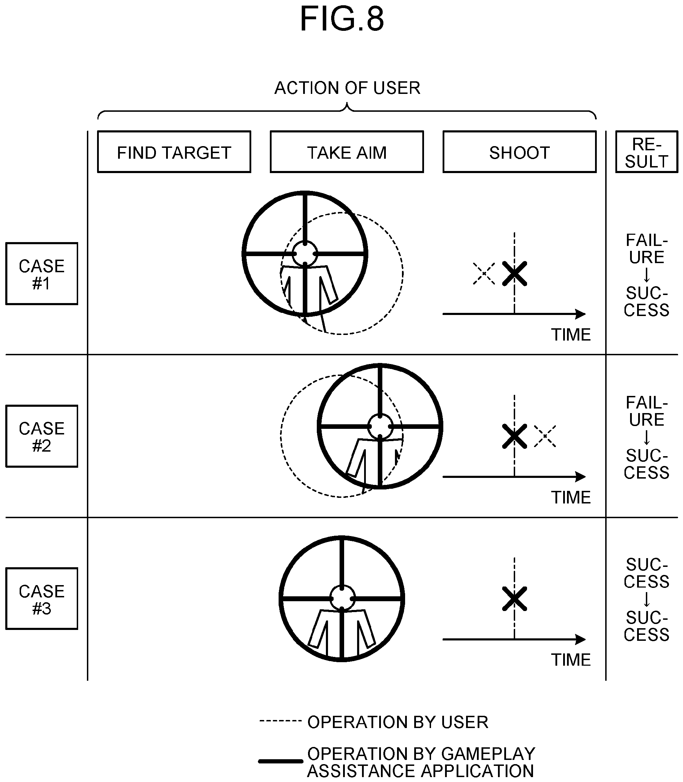

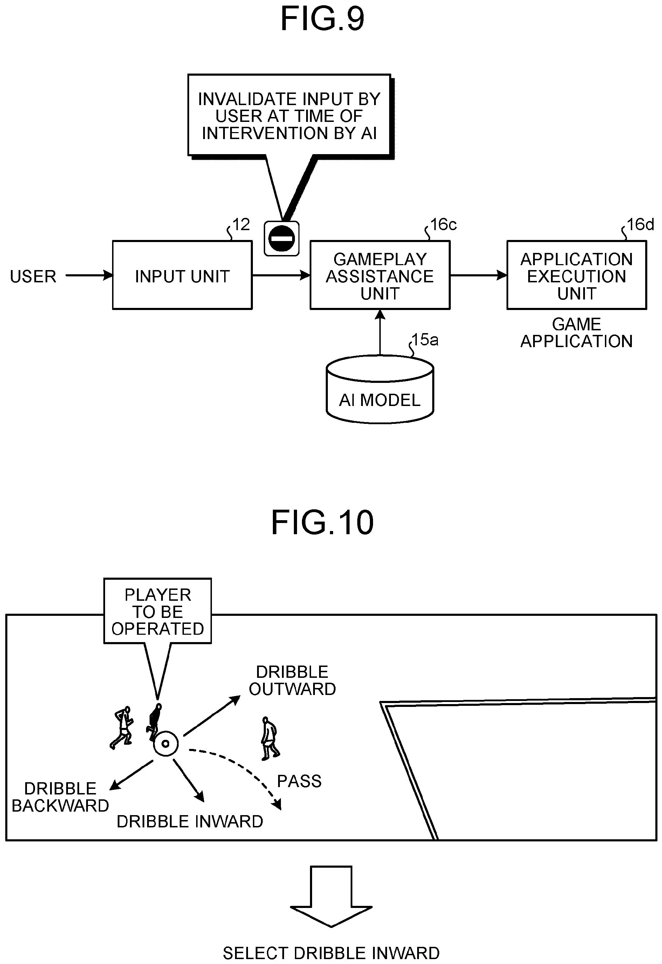

First, a shooting game such as the TPS will be described as an example. FIG. 6 is a view (part 1) illustrating a specific example of a case of the shooting game. FIG. 7 is a view (part 2) illustrating the specific example of the case of the shooting game. FIG. 8 is a view (part 3) illustrating the specific example of the case of the shooting game. FIG. 9 is an explanatory diagram of temporal invalidation of the input by the user.

As illustrated in FIG. 6, here, for example, a shooting game in which a target enemy is shot with aim through a sight is assumed.

In such a case, as illustrated in FIG. 7, examples of the action of the user in the gameplay include "finding a target", "taking aim", and "shooting". When the operation of "shooting" by the user is the above-described "specific input", each piece of the operation of "finding a target" and "taking" leading to "shooting", and actually "shooting" corresponds to the above-described "operation before an input".

Here, as illustrated in FIG. 7, it is assumed that there are a case #1 to a case #3 played by the user in the past, and that results of the shooting is "failure" in the case #1, "failure" in the case #2, and "success" in the case #3.

The learning unit 16b learns the correlation of the "operation before an input" and the "result" of each of the cases. Then, by using the AI model 15a that is the learning result, the gameplay assistance unit 16c, that is, the AI calculates an input method that can succeed in all the cases.

Then, in and after the next gameplay by the user, by detecting a pattern of the operation before the input by the user, the AI specifies a successful input pattern from the calculated input method. Then, in the gameplay, the AI temporarily invalidates the input by the user and performs replacement with the specified input pattern to be successful.

Specifically, as illustrated in FIG. 8, in a case where the AI detects the pattern of the operation before the input by the user as the "case #1" similar to that in FIG. 7, the AI automatically replaces the operation of "taking aim" and the operation of "shooting" by the user with an input pattern to be successful.

That is, the AI automatically corrects an aiming position in the operation of "taking aim" by the input by the user and shooting timing in the operation of "shooting" in such a manner that an input pattern becomes similar to, for example, that of the "case #3" that is a successful example.

In addition, the AI automatically performs correction in such a manner that the input pattern becomes similar to that of the "case #3" in a case of detecting that the pattern of the operation before the input by the user is the "case #2" similar to that in FIG. 7.

In addition, in a case of detecting that the pattern of the operation before the input by the user is the "case #3" similar to that in FIG. 7, the AI automatically performs correction in such a manner that the input pattern becomes similar to that of the previous "case #3". Note that in a case where the pattern of the "case #3" is detected, the AI may determine that it is highly likely that the input by the user succeeds as it is, and does not necessarily perform the correction.

That is, as illustrated in FIG. 9, at the time of intervention, the AI (gameplay assistance unit 16c) temporarily invalidates the input by the user, and inputs the input pattern to be successful, which input pattern is specified by utilization of the AI model 15a, to the application execution unit 16d (game application).

### <3-2. Example of a soccer game>

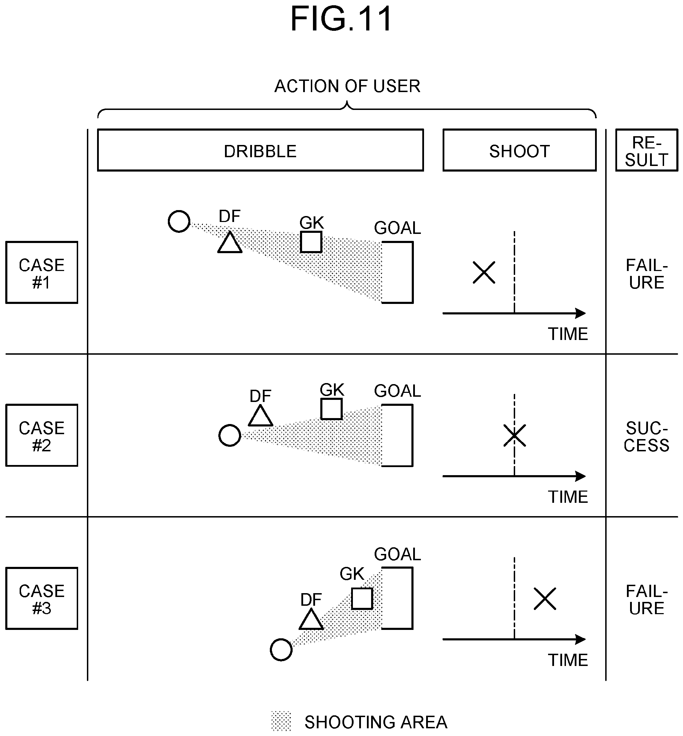

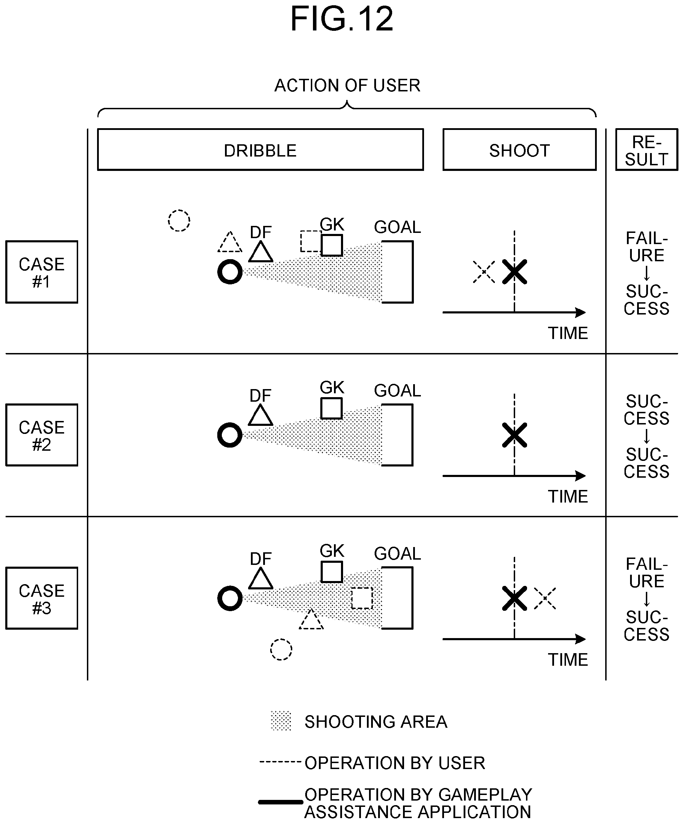

Next, a soccer game will be described as an example. FIG. 10 is a view (part 1) illustrating a specific example of a case of the soccer game. FIG. 11 is a view (part 2) illustrating the specific example of the case of the soccer game. FIG. 12 is a view (part 3) illustrating the specific example of the case of the soccer game.

As illustrated in FIG. 10, here, in the soccer game, for example, it is assumed that a player to be operated by the user holds a ball near a goal of an opposing side and selects "dribbling inward" from options of "dribbling outward", "dribbling inward", "dribbling backward", and "passing".

In such a case, as illustrated in FIG. 11, examples of the action of the user in the gameplay include "dribbling" inward and "shooting". When the operation of "shooting" by the user is the above-described "specific input", each of the operations of "dribbling" inward until the "shooting" and actually "shooting" corresponds to the above-described "operation before an input".

Here, as illustrated in FIG. 11, it is assumed that there are a case #1 to a case #3 played by the user in the past, and a shooting area is blocked by a defender DF and a goalkeeper GK and a result of the shooting is "failure" in the cases #1 and #3, and the result is "success" in the case #2.

The learning unit 16b learns the correlation of the "operation before an input" and the "result" of each of the cases. Then, by using the AI model 15a that is the learning result, the gameplay assistance unit 16c, that is, the AI calculates an input method that can succeed in all the cases.

Then, in and after the next gameplay by the user, by detecting a pattern of the operation before the input by the user, the AI specifies a successful input pattern from the calculated input method. Then, in the gameplay, the AI temporarily invalidates the input by the user and performs replacement with the specified input pattern to be successful.

Specifically, as illustrated in FIG. 12, in a case where a pattern of the operation before the input by the user is detected as the "case #1" similar to that in FIG. 11, the AI automatically replaces the operation of "dribbling" and the operation of "shooting" by the user with an input pattern to be successful.

That is, the AI automatically corrects a movement amount to the shooting position in the operation of "dribbling" by the input by the user and shooting timing in the operation of "shooting" to have an input pattern similar to that of the "case #2" that is a successful example, for example.

In addition, the AI automatically performs correction in such a manner that the input pattern becomes similar to that of the "case #2" in a case of detecting that the pattern of the operation before the input by the user is the "case #3" similar to that in FIG. 11.

In addition, in a case of detecting that the pattern of the operation before the input by the user is the "case #2" similar to that in FIG. 11, the AI automatically performs correction in such a manner that the input pattern becomes similar to that of the previous "case #2". Note that in a case where the pattern of the "case #2" is detected, the AI may determine that it is highly likely that the input by the user succeeds as it is, and does not necessarily perform the correction.

Note that in the above, an example in which "finding opponent", "taking aim", and "shooting" are the operation before the input in a case of the shooting game, and "dribbling" and "shooting" are the operation before the input in a case of the soccer game has been described. Then, in addition, an example in which the AI performs pattern detection of the case #1 to the case #3 in the gameplay has been described. However, the operation before the input which operation serves as a so-called query of the pattern detection may be performed for a specific input, for example, over a wider range throughout the gameplay, for example.

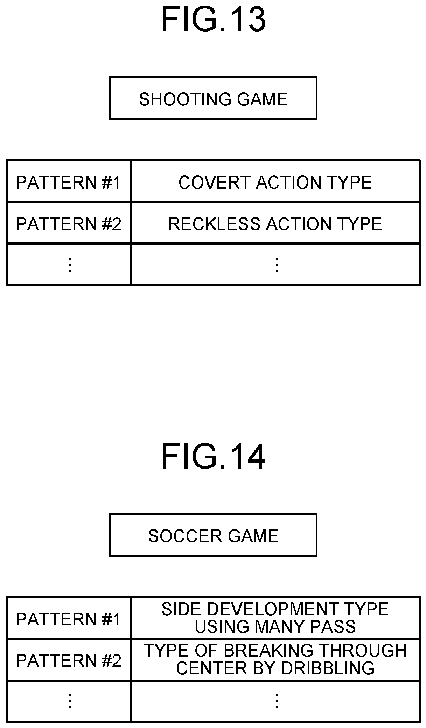

FIG. 13 is an explanatory diagram of pattern detection (in a case of the shooting game). FIG. 14 is an explanatory diagram of pattern detection (in a case of the soccer game). That is, the operation before the input may be learned over a wider range throughout the gameplay, and it may be made possible for the AI model 15a to estimate a pattern of a play style of the user.

In such a case, in a case of the shooting game, as illustrated in FIG. 13, it is conceivable that the play style of the user is estimated in a pattern such as a "covert action type" or "reckless action type". For example, in a case where the play style of the user is the "covert action type" or the "reckless action type", the AI may intervene in such a manner that the input of the user is replaced with the input pattern to be successful while responding to each of the play styles.

Similarly, in a case of the soccer game, as illustrated in FIG. 14, it is conceivable that the play style of the user is estimated in a pattern such as a "side development type using many passes" or "type of breaking through the center by dribbling", for example. For example, in a case where the play style of the user is the "side development type using many passes" or "type of breaking through the center by dribbling", the AI may intervene in such a manner that the input by the user is replaced with an input pattern to be successful while responding to each of the play styles.

### <3-3. Example of coaching>

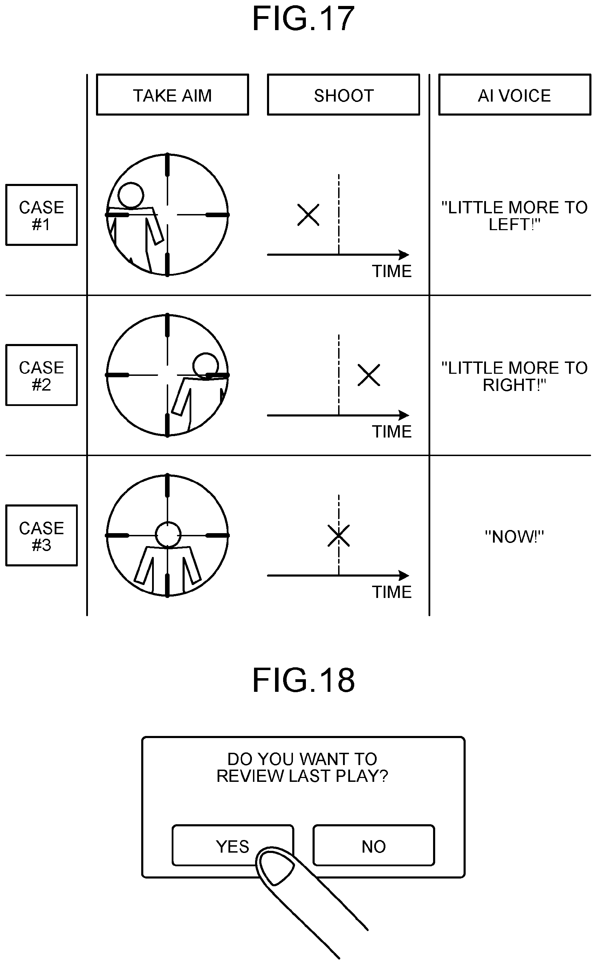

Next, an example of a case where the above-described coaching is performed will be described. FIG. 15 is a view illustrating an example of coaching corresponding to a skill of the user. FIG. 16 is a view illustrating an example of a setting screen of real-time coaching. FIG. 17 is a view illustrating a specific example of the real-time coaching.

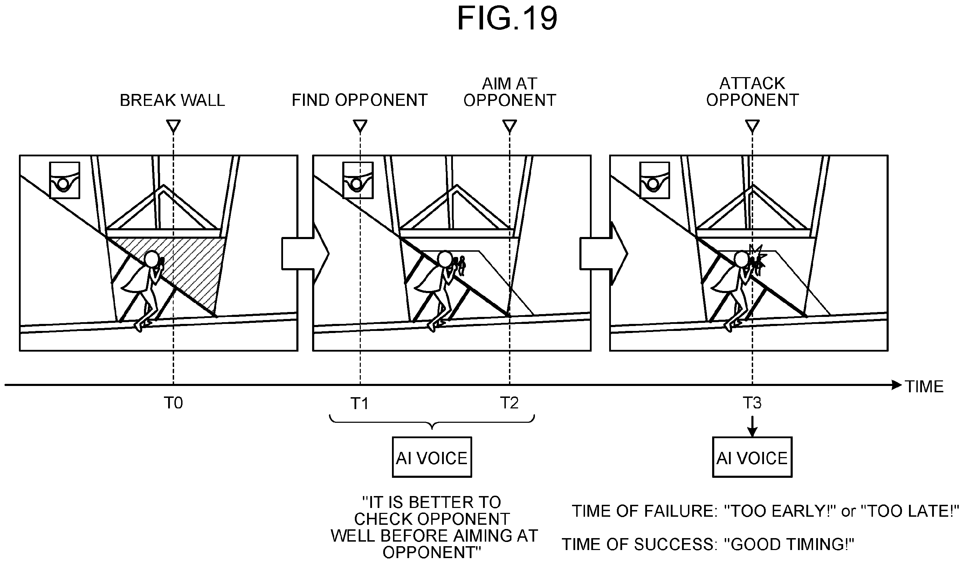

FIG. 18 is a view illustrating a guide example of replay coaching. FIG. 19 is a view illustrating a specific example of the replay coaching. FIG. 20 is an explanatory diagram of changing a method of coaching according to a surrounding environment.

As described above, the AI according to the embodiment of the present disclosure can perform on-demand coaching by voice or the like at the time of the play by the user, or the like. As illustrated in FIG. 15, the AI can perform, for example, coaching corresponding to the skill of the user.

The example of FIG. 15 is a case of the shooting game. The AI can perform coaching in such a manner that a difficulty level is high in a case where the skill of the user is high compared to a case where the skill of the user is low. For example, in a case of the above-described operation of "shooting", "shooting stationarily" is performed when the skill is low and "shooting while moving" is performed when the skill is high.

Similarly, for example, in a case of the above-described operation of "taking aim", the AI can perform the coaching in such a manner that the difficulty level becomes high in a case where the skill of the user is high compared to a case where the skill of the user is low. For example, "aiming at any part of an opponent" is performed when the skill is low and "aiming at a head of the opponent" is performed when the skill is high.

Furthermore, the AI can perform, for example, coaching that responds to the pattern-detected operation before the input by the user in real time. Hereinafter, such coaching is referred to as "real-time coaching". The real-time coaching can be provided when the user sets the real-time coaching to ON on a setting screen in a manner illustrated in FIG. 16, for example.

FIG. 17 is a view illustrating each case of a case where the user operation similar to that illustrated in FIG. 7 is performed in the shooting game. In such a case, as illustrated in FIG. 17, in a case where a pattern of the case #1 is detected, the AI can perform the real-time coaching of causing the user to adjust the operation of "taking aim" a little more to a left side by emitting voice such as "A little more to the left!", for example.

Similarly, in a case where a pattern of the case #2 is detected, the AI can perform the real-time coaching of causing the user to adjust the operation of "taking aim" a little more to a right side by emitting voice such as "A little more to the right!", for example.

Similarly, in a case where a pattern of the operation before the input similar to that of the case #3 is detected, the AI can perform the real-time coaching of instructing the user on timing of "shooting", for example, by emitting voice "Now!".

As a result, the user can improve the play accuracy while receiving the coaching by the AI in real time during the play.

Furthermore, the AI can perform coaching while replaying a video of a play scene during or after the play, for example. Hereinafter, such coaching is referred to as "replay coaching".

The replay coaching is started, for example, when the AI displays a dialog for guiding the replay coaching in a manner illustrated in FIG. 18 and the user performs operation that responds to the dialog. Note that FIG. 18 is merely an example, and for example, the user may arbitrarily select a scene that the user wants to replay during or after the play, and the replay coaching may be started according to such selection.

Furthermore, the AI may extract a scene, on which the replay coaching is to be performed, during the play by the user, and may display a pop-up of the scene after the play by the user. In addition, the AI may replay all scenes after the play, and the replay coaching may be started when a scene on which the replay coaching is to be performed is reached.

Then, a specific example of the replay coaching is illustrated in FIG. 19. As illustrated in FIG. 19, in a case where the game application is a shooting game such as the TPS, it is assumed that there is a series of flows of scenes of "breaking a wall", "finding an opponent", "aiming at the opponent", and "attacking the opponent" in play scenes played by the user in the past.

Then, while replaying a video of these series of play scenes, the AI performs coaching by voice such as "It is better to check the opponent well before aiming at the opponent" in the operation up to the "aiming at the opponent" at a time point T2 with a scene of "finding an opponent" at a time point T1 as a trigger.

Furthermore, for example, the AI performs coaching by voice such as "Too early!" or "Too late!" when the user fails with respect to the operation of "attacking the opponent" at a time point T3. On the other hand, when the user succeeds, for example, coaching such as "Good timing!" is performed. As a result, the user can improve the play accuracy of himself/herself by receiving the coaching corresponding to the play actually performed by his/her own while actually checking the scene to be reproduced.

Note that although a case where the AI performs the coaching by voice has been described above as an example, the coaching by voice may be inappropriate depending on the surrounding environment in which the user is playing a game. Examples of the case where the coaching by voice is inappropriate include a case where the user plays a game in public transportation during commuting or going to a school, and a case where a manner mode is set in the information processing device 10.

In such a case, as illustrated in FIG. 20, the AI (gameplay assistance unit 16c) detects the surrounding environment via the sensor unit 11, and changes a support method, that is, the method of coaching according to the detected surrounding environment. For example, in a case where the detected surrounding environment is inappropriate for coaching by voice, the AI changes the method of coaching from voice to a method via chat or the like.

Note that as illustrated in FIG. 20, latency via the game server 100 and the network N may be detected as the surrounding environment, and input timing adjustment may be performed in consideration of the latency. Furthermore, although an example in which each of the information processing devices 10 includes the AI has been described in the above, the game server 100 may include the AI according to the embodiment of the present disclosure, and the AI of the game server 100 may provide the gameplay assistance function by the gameplay assistance processing described above to each of the information processing devices 10.

### <<4. Example of notification to another information processing device>>

Next, an example of notification to another information processing device 10 will be described with reference to FIG. 21. FIG. 21 is an explanatory diagram of the example of the notification to the other information processing device 10. Note that FIG. 21 is a view illustrating a game screen displayed on the other information processing device 10.

As illustrated in FIG. 21, in a case where another user confirms the user, who is in the auto-play, from a third party viewpoint by using the other information processing device 10 via the network N, the gameplay assistance unit 16c notifies the other information processing device 10 that the user is in the auto-play.

As illustrated in FIG. 21, the other information processing device 10 that receives such a notification displays information indicating that the user is during the auto-play and is receiving coaching by the AI (notation of "during AI coaching" in the example of FIG. 21) together with a user name of the user. As a result, in an online game such as the TPS or the MMORPG, it is possible for another participant to easily distinguish whether the user is in the auto-play, to prevent unnecessary talking in chat or the like, to easily understand even when an unauthentic reaction is returned in the chat or the like, or to easily understand that the skill is extremely high.

### <<5. Modification example>>

Incidentally, there are some modification examples for the above-described embodiment of the present disclosure.

For example, although it is assumed that the AI model 15a is the DNN in the embodiment of the present disclosure, the configuration of the AI model 15a learned by machine learning is not limited. For example, the AI model 15a may be a variational auto encoder (VAE), a generative adversarial network (GAN), or the like. In addition, algorithm other than deep learning may be used as algorithm of machine learning. For example, machine learning may be executed by a regression analysis method such as support vector regression using a pattern identifier such as a support vector machine (SVM) and the AI model 15a may be learned. Furthermore, here, the pattern identifier is not limited to the SVM, and may be, for example, AdaBoost. In addition, random forest, deep forest, or the like may be used.

Furthermore, among the pieces of processing described in the above-described embodiment of the present disclosure, a whole or part of the processing described to be automatically performed can be manually performed, or a whole or part of the processing described to be manually performed can be automatically performed by a known method. In addition, the processing procedures, specific names, and information including various kinds of data or parameters in the above document or in the drawings can be arbitrarily changed unless otherwise specified. For example, various kinds of information illustrated in each of the drawings are not limited to the illustrated information.

In addition, each component of each of the illustrated devices is a functional concept, and does not need to be physically configured in the illustrated manner. That is, a specific form of distribution/integration of each device is not limited to what is illustrated in the drawings, and a whole or part thereof can be functionally or physically distributed/integrated in an arbitrary unit according to various loads and usage conditions.

In addition, the above-described embodiments of the present disclosure can be arbitrarily combined in a region in which the processing contents do not contradict each other. Furthermore, the order of steps illustrated in the sequence diagram or the flowchart of the present embodiment can be changed as appropriate.

### <<6. Hardware configuration>>

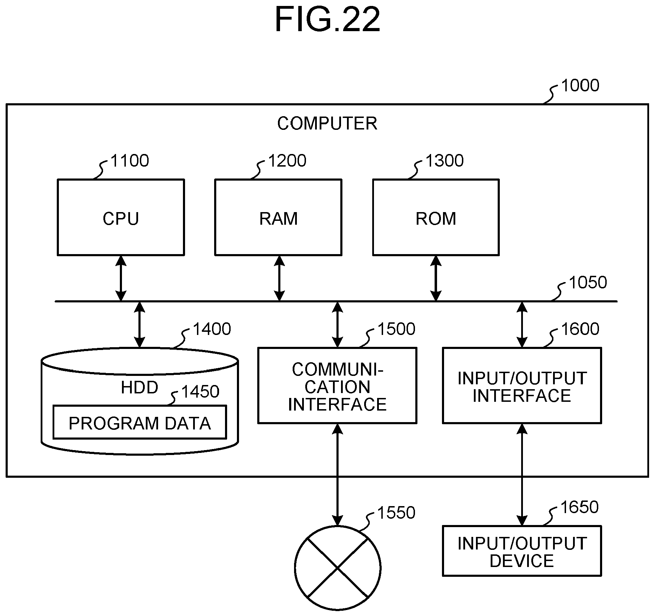

Furthermore, the information processing device 10 according to the above embodiment of the present disclosure is realized by, for example, a computer 1000 having a configuration in a manner illustrated in FIG. 22. FIG. 22 is a hardware configuration diagram illustrating an example of the computer 1000 that realizes functions of the information processing device 10. The computer 1000 includes a CPU 1100, a RAM 1200, a ROM 1300, a hard disk drive (HDD) 1400, a communication interface 1500, and an input/output interface 1600. Each unit of the computer 1000 is connected by a bus 1050.

The CPU 1100 operates on the basis of programs stored in the ROM 1300 or the HDD 1400, and controls each unit. For example, the CPU 1100 expands the programs, which are stored in the ROM 1300 or the HDD 1400, in the RAM 1200 and executes processing corresponding to the various programs.

The ROM 1300 stores a boot program such as a basic input output system (BIOS) executed by the CPU 1100 during activation of the computer 1000, a program that depends on hardware of the computer 1000, and the like.

The HDD 1400 is a computer-readable recording medium that non-temporarily records the programs executed by the CPU 1100, data used by the programs, and the like. Specifically, the HDD 1400 is a recording medium that records a program according to the embodiment of the present disclosure which program is an example of program data 1450.

The communication interface 1500 is an interface with which the computer 1000 is connected to an external network 1550 (such as the Internet). For example, the CPU 1100 receives data from another equipment or transmits data generated by the CPU 1100 to another equipment via the communication interface 1500.

The input/output interface 1600 is an interface to connect an input/output device 1650 and the computer 1000. For example, the CPU 1100 receives data from an input device such as a keyboard or mouse via the input/output interface 1600. Furthermore, the CPU 1100 transmits data to an output device such as a display, speaker, or printer via the input/output interface 1600. Also, the input/output interface 1600 may function as a medium interface that reads a program or the like recorded on a predetermined recording medium (medium). The medium is, for example, an optical recording medium such as a digital versatile disc (DVD) or phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing device 10 according to the embodiment of the present disclosure, the CPU 1100 of the computer 1000 realizes a function of the control unit 16 by executing the program loaded on the RAM 1200. Also, the HDD 1400 stores a program according to the present disclosure, and data in the storage unit 15. Note that the CPU 1100 reads the program data 1450 from the HDD 1400 and performs execution thereof. However, these programs may be acquired from another device via the external network 1550 in another example.

### <<7. Conclusion>>

As described above, according to an embodiment of the present disclosure, the information processing device 10 includes the learning unit 16b that learns the action of the user on the game application (corresponding to an example of an "application") by machine learning, and the gameplay assistance unit 16c (corresponding to an example of an "assistance unit") that executes, across one or more of the game applications, gameplay assistance processing (corresponding to an example of "operation assistance processing") of assisting the input by the user on the game application by using a learning result of the learning unit 16b. As a result, it is possible to improve convenience in the gameplay (corresponding to an example of "application operation") by the user regardless of the game application.

Although embodiments of the present disclosure have been described above, a technical scope of the present disclosure is not limited to the above-described embodiments as they are, and various modifications can be made within the spirit and scope of the present disclosure. In addition, components of different embodiments and modification examples may be arbitrarily combined.

Also, an effect in each of the embodiments described in the present description is merely an example and is not a limitation, and there may be a different effect.

Note that the present technology can also have the following configurations.
(1) An information processing device comprising:
   a learning unit that learns an action of a user on an application by machine learning; and
   an assistance unit that executes, across one or more of the applications, operation assistance processing of assisting an input by the user on the application by using a learning result of the learning unit.
(2) The information processing device according to (1), wherein
   the application is a game application,
   the learning unit
   learns correlation of operation before an input with respect to a specific input in the game application and a result of the specific input, and
   the assistance unit
   uses a learning result of the correlation and assists the input by the user in such a manner that a result of the specific input by the user becomes successful.
(3) The information processing device according to (2), wherein
   the assistance unit
   calculates an input value that makes the result of the specific input successful for each pattern of the operation before the input by using the learning result of the correlation, and specifies, in a case where a pattern of the operation before the input by the user is detected, the input value corresponding to the operation before the input in which operation the pattern is detected.
(4) The information processing device according to (3), wherein
   the assistance unit
   temporarily invalidates the input by the user and replaces the input by the user with the specified input value.
(5) The information processing device according to (2), (3) or (4), wherein
   the assistance unit further
   executes the operation assistance processing of performing coaching on the input by the user.
(6) The information processing device according to (5), wherein
   the assistance unit
   executes the operation assistance processing in such a manner as to perform the coaching corresponding to a skill of the user.
(7) The information processing device according to (5) or (6), wherein
   the assistance unit
   executes, in a case where a pattern of the operation before the input by the user is detected, the operation assistance processing in such a manner as to perform the coaching that responds to the operation before the input, in which operation the pattern is detected, in real time.
(8) The information processing device according to (5), (6), or (7), wherein
   the assistance unit
   executes the operation assistance processing in such a manner as to change a method of the coaching according to a surrounding environment of the user.
(9) The information processing device according to any one of (2) to (8), wherein
   the assistance unit
   notifies another user other than the user, via a network, that the user is assisted by the operation assistance processing.
(10) An information processing method comprising:
   learning an action of a user on an application by machine learning; and
   executing, across one or more of the applications, operation assistance processing of assisting an input by the user on the application by using a learning result of the learning.
(11) A program causing a computer to realize
   learning an action of a user on an application by machine learning, and
   executing, across one or more of the applications, operation assistance processing of assisting an input by the user on the application by using a learning result of the learning.

### Reference Signs List

- 10: INFORMATION PROCESSING DEVICE
- 11: SENSOR UNIT
- 12: INPUT UNIT
- 13: OUTPUT UNIT
- 14: COMMUNICATION UNIT
- 15: STORAGE UNIT
- 15a: AI MODEL
- 15b: APPLICATION INFORMATION
- 16: CONTROL UNIT
- 16a: ACQUISITION UNIT
- 16b: LEARNING UNIT
- 16c: GAMEPLAY ASSISTANCE UNIT
- 16d: APPLICATION EXECUTION UNIT
- 16e: TRANSMISSION/RECEPTION UNIT
- 100: GAME SERVER
- N: NETWORK

## Claims

1. An information processing device comprising:
a learning unit that learns an action of a user on an application by machine learning; and
an assistance unit that executes, across one or more of the applications, operation assistance processing of assisting an input by the user on the application by using a learning result of the learning unit.

2. The information processing device according to claim 1, wherein
the application is a game application,
the learning unit
learns correlation of operation before an input with respect to a specific input in the game application and a result of the specific input, and
the assistance unit
uses a learning result of the correlation and assists the input by the user in such a manner that a result of the specific input by the user becomes successful.

3. The information processing device according to claim 2, wherein
the assistance unit
calculates an input value that makes the result of the specific input successful for each pattern of the operation before the input by using the learning result of the correlation, and specifies, in a case where a pattern of the operation before the input by the user is detected, the input value corresponding to the operation before the input in which operation the pattern is detected.

4. The information processing device according to claim 3, wherein
the assistance unit
temporarily invalidates the input by the user and replaces the input by the user with the specified input value.

5. The information processing device according to claim 2, wherein
the assistance unit further
executes the operation assistance processing of performing coaching on the input by the user.

6. The information processing device according to claim 5, wherein
the assistance unit
executes the operation assistance processing in such a manner as to perform the coaching corresponding to a skill of the user.

7. The information processing device according to claim 5, wherein
the assistance unit
executes, in a case where a pattern of the operation before the input by the user is detected, the operation assistance processing in such a manner as to perform the coaching that responds to the operation before the input, in which operation the pattern is detected, in real time.

8. The information processing device according to claim 5, wherein
the assistance unit
executes the operation assistance processing in such a manner as to change a method of the coaching according to a surrounding environment of the user.

9. The information processing device according to claim 2, wherein
the assistance unit
notifies another user other than the user, via a network, that the user is assisted by the operation assistance processing.

10. An information processing method comprising:
learning an action of a user on an application by machine learning; and
executing, across one or more of the applications, operation assistance processing of assisting an input by the user on the application by using a learning result of the learning.

11. A program causing a computer to realize
learning an action of a user on an application by machine learning, and
executing, across one or more of the applications, operation assistance processing of assisting an input by the user on the application by using a learning result of the learning.
